# EUROPÄISCHE PATENTANMELDUNG

(11) **EP 0 738 019 A1**
(43) Veröffentlichungstag der Anmeldung: **16.10.1996**
(21) Anmeldenummer: 96102044.3
(22) Anmeldetag: 13.02.1996
(51) Int. Cl.: H01M 8/02, H01M 8/12, C04B 35/42, H01B 1/08, C25B 9/04

(54) **Verbindungselement auf Lanthanchromitbasis für Hochtemperaturbrennstoffzellen und Hochtemperaturelektrolysezellen**

(30) Priorität: 15.04.1995 DE 19514164
(71) Anmelder: DORNIER GmbH, D-88039 Friedrichshafen (DE)
(72) Erfinder: Kurbjuhn, Manfred, Ing., D-88046 Friedrichshafen (DE); Stolten, Detlef, Dr.-Ing., D-88690 Mühlhofen (DE); Wagner, Wolfgang, Ing., D-88693 Deggenhausertal (DE)

(57) **Zusammenfassung**

Die Erfindung betrifft ein selbsttragendes Verbindungselement in planaren-Hochtemperaturbrenntsoffzellen oder Hochtemperaturelektrolysezellen mit der Zusammensetzung

La_{1+δ}MgₓAl_{y}Cr_{1-x-y}O_{3±ε}

mit 0 ≦ δ ≦ 0,1 und 0,02 ≦ x ≦ 0,1 und 0,1 ≦ y ≦ 0,25
sowie 0 ≦ ε ≦ 0,1.

## Beschreibung

Die Erfindung betrifft ein Verbindungselement auf Lanthanchromitbasis für Hochtemperaturbrennstoff- und elektrolysezellen. Hochtemperaturbrennstoffzellen (solid oxid fuel cells, sofc) sind elektrochemische Energiewandler, die elektrische Energie auf elektrochemischem Wege direkt aus den Brenngasen (z.B. H₂, CO, CH₄) unter Umgehung des Verbrennungsprozesses erzeugen. Sie basieren auf - meist kubisch - stabilisiertem Zirkoniumoxid als sauerstoffionenleitendem Festelektrolyten und werden im Bereich von 800 - 1000°C betrieben.

Zukünftige Anwendungen sind primär dezentrale, stationäre Anlagen zur Stromerzeugung aus Erdgas mit hohen Wirkungsgraden. Desweiteren sind auch die Kombinationen mit nachgeschalteten Gas- und Dampfturbinen möglich. Auch mobile Anwendungen werden, insbesondere in Amerika, diskutiert. Die Direktverstromung der Brenngase bietet gegenüber Wärmekraftmaschinen wesentliche ökologische Vorteile:
- geringere CO₂-Belastung durch höheren Wirkungsgrad
- vernachlässigbare NOₓ-Emissionen durch niedrigere Arbeitstemperatur von 1000°C
- dezentral einsetzbar durch modularen Aufbau.

Die für die Brennstoffzellen beschriebenen Anordnung können auch für den Umkehrprozeß der Hochtemperaturelektrolyse verwendet werden. Dabei wird aus Wasser im Bereich von 800 bis 1000°C mit hohem Wirkungsgrad Wasserstoff hergestellt.

Im Hinblick auf die Wirtschaftlichkeit und hohe Energiedichte ist ein planares Zelldesign vorteilhaft. Bei diesen bekannten Anordnungen sind dünne Festelektrolytplatten beidseitig mit porösen Elektroden beschichtet. Mehrere Elektrolyte mit Elektroden werden abwechselnd mit Verbindungselementen übereinandergestapelt, so daß eine bipolare Anordnung entsteht, die einer seriellen Verschaltung mehrerer Zellen entspricht. Über Gasleitungen und elektrische Leitungen können diese Zellverbunde weiter verschaltet werden.

Für die genannten Systeme werden im Stand der Technik vorzugsweise die folgenden Werkstoffe verwendet:
- **Elektrolyt:**: ZrO₂ mit CaO, MgO, Y₂O₃ oder anderer Seltenerdoxiddotierung, sowie teilweise auch mit Al₂O₃-Zusatz
- **Brenngaselektrode:**: Metallkeramikverbundwerkstoff mit Nickel oder Kobalt als metallischer und dotiertem CeO₂ oder ZrO₂ als keramischer Komponente
- **Luftelektrode:**: Dotierte Oxide mit Perowskitstruktur, wie z.B.
La₁₋ₓCaₓMnO₃ La₁₋ₓSrₓMnO₃ La₁₋ₓSrₓCo_{y}Mn_{1-y}O₃

### Verbindungselemente:

Hierfür werden entweder keramische Werkstoffe auf Lanthanchromitbasis verwendet, oder metallische auf Chrombasis. Aufgrund ihrer Oxidationsunempfindlichkeit bieten die keramischen Werkstoffe Vorteile. Üblicherweise sind die Lanthanchromite Mg-, Ca- oder Sr- dotiert.

Die genannten Komponenten werden durch Prozesse wie Löten über Gläser, Glaskeramiken oder metallische Hochtemperaturlote, beziehungsweise Zusammensintern gefügt. Die resultierenden Zellstapel sollten vorteilhafter Weise gasdicht sein. Vollständige Gasdichtigkeit ist aber, je nach Design und Auslegung, keine zwingende Forderung

Durch die Fügeprozesse werden die Komponenten auch mechanisch miteinander verbunden. In einem solchen Zellstapel müssen also die mechanischen/thermomechanischen Eigenschaften der verschiedenen Komponenten sehr gut aufeinander abgestimmt werden, um mechanische Spannungen zu vermeiden, oder zumindest zu minimieren. Das bedeutet im wesentlichen, daß die thermischen Dehnungen der übrigen Komponenten an die des Zirkoniumoxides angepaßt werden müssen, da der Festelektrolyt die Komponente mit den geringsten Eingriffsmöglichkeiten in diese Materialeigenschaft darstellt.

Bei sehr niedrigen Sauerstoffpartialdrücken, wie sie auf der Brenngasseite der Brennstoffzellen - beziehungsweise der Wasserstoffseite der Elektrolysezellen - vorkommen, dehnt sich Lanthanchromit leicht aus. Die Ausdehnung resultiert aus einer Wertigkeitsänderung der Chromionen und damit aus deren Veränderung des Ionenradius. Der Wirkungsmechanismus und die Abhängigkeit von der Dotierung sind unten, dem Stand der Technik entsprechend, näher beschrieben. Durch die Quellung (swelling) entstehen im Stack bei Betrieb zusätzliche mechanische Spannungen, da nur das Lanthanchromit, nicht aber die anderen mit den Lanthanchromitbauteilen fest verbundenen Komponenten diese Quellung zeigen.

Eine weitere wesentliche Größe zur Materialoptimierung stellt die elektrische Leitfähigkeit dar. Da der Strom in einem Zellstapel jeweils durch die Verbindungselemente fließt, soll das Lanthanchromit eine möglichst hohe elektrische Leitfähigkeit besitzen. Sie ist stark von der Dotierung abhängig.

Die wesentlichen Eckpfeiler der Materialoptimierung sind also:
- thermische Dehnung
- Quellung
- elektrische Leitfähigkeit.

### Zusammenhang Elektrische Leitfähigkeit / Quellung

Lanthanchromit wird in der Regel zur Verwendung in Brennstoffzellen dotiert, um die Leitfähigkeit des reinen Materials von etwa 1 Scm⁻¹ und die lineare thermische Dehnung von etwa α_{20/1000} = 9, 0 · 10⁻⁶K⁻¹ auf die des Elektrolytmaterials (dotiertes Zirkoniumoxid, α_{20/1000} = 10, 5 · 10⁻⁶K⁻¹) zu erhöhen /1-3/. Zur Dotierung wird ein Teil der dreiwertigen Ionen der Perowskitverbindung (ABO₃) durch zweiwertige Ionen wie Mg, Ca oder meistens Sr substituiert. Diese Substitution erhöht die Anzahl der Ladungsträger, indem zur Erhaltung der Elektroneutralität die Wertigkeit des Chroms teilweise von +3 auf +4 erhöht wird. Die elektrische Leitfähigkeit steigt somit mit der Dotierungskonzentration an und findet entsprechend des kleinen Polaronenmechanismus statt /1-3/. Unter reduzierenden Bedingungen (Beaufschlagung mit Brenngas) wird Sauerstoff aus der Verbindung ausgebaut. Der Ausbau führt aufgrund der Elektroneutralitätsbedingung dazu, daß sich das durch Dotierung 4-wertige Chrom in 3-wertiges umwandelt und damit einen grösseren Ionenradius annimmt. Diese Wertigkeitsänderung führt zu einer makroskopischen Quellung (swelling, dilatation) des Materials.
Die Tatsache des Sauerstoff-Ausbaus wird im folgenden durch die Schreibweise ABO_{3±ε} für die Perowskitstruktur gekennzeichnet. Dabei liegt ε maximal etwa im Bereich der Erdalkalidotierung, d.h. es wird im wesentlichen nur so viel Sauerstoff ausgebaut, daß die Elektroneutralitätsbedingung durch den Wertigkeitswechsel von Cr⁴⁺ zu Cr³⁺ erfüllt werden kann. Darüberhinaus wird im wesentlichen Maße erst unter extrem reduzierenden Bedingungen, wie sie in Hochtemperaturbrenntstffzellen nicht vorkommen, unter Zersetzung des Materials Sauerstoff ausgebaut.

### Dotierungen

In Brennstoffzellen wird überwiegend Sr-dotiertes LaCrO₃ verwendet; die Sr-Konzentration beträgt dabei meistens 16 atom% auf dem A-Platz /vgl.: 4-5/. Damit werden bei einer Leitfähigkeit von etwa 10 Scm⁻¹ und einer thermischen Dehnung von etwa α_{20/1000} = 10, 3 · 10-6 K⁻¹ diesbezüglich gute Eigenschaften erreicht. Die Quellung des Materials liegt jedoch nach eigenen Erkenntnissen mit 0,11 % wesentlich zu hoch und führt zu Rissen im versinterten Zellstack bei der Beaufschlagung mit Brenngas. Der Vergleich mit der Bruchdehnung kubisch stabilisierten Zirkoniumoxides zeigt, daß die genannte Quellung für den Stack kritisch sein muß. Zirkoniumoxid weist bei einer mittleren Bruchspannung von 300 MPa und einem Elastizitätsmodul (Young^{°}s modulus) von 200 GPa eine Bruchdehnung von 0,15 % auf. Da die mittlere Bruchspannung angesetzt wurde, bricht aber bei der genannten Dehnung bereits der überwiegende Teile der Proben. Der Wert der Bruchdehnung liegt in der Nähe des Quellwertes für Sr-dotiertes Lanthanchromit. Da die durch die Quellung auftretenden Verformungen in planaren Brennstoffzellen von dem dickeren Lanthanchromitverbindungselement direkt auf den dünnen Zirkoniumoxidelektrolyten übertragen werden, sind bei einer Quellung von 0,11 % Schäden zu beobachten.

Durch Dotierung mit Mg (**EP 0338 823**) kann zwar die Leitfähigkeit erhöht, nicht aber die thermische Dehnung an die des Zirkoniumoxids angepaßt werden. Außerdem bleibt die orthorhombisch / rhomboedrische Phasenumwandlung des Materials bestehen /6/. Vorteilhaft an der Dotierung mit Mg ist, daß die Quellung geringer ist als bei der Dotierung mit Strontium /6/.

Wenn der B-Platz des perowskitischen Lanthanchromits mit Al dotiert wird (**E P 0 338 823**), läßt sich damit die thermische Dehnung an die des Zirkoniumoxids anpassen; allerdings sind dafür etwa 30 atom% Dotierung auf dem B-Platz erforderlich. Die elektrische Leitfähigkeit verringert sich dann aber durch die "Verdünnung" der diese Eigenschaften bewirkenden Chromionen /6/.

### Sinterverhalten / Wasserdampfbeständigkeit bei Raumtemperatur

Lanthanchromit sintert sehr schwer und nur bei sehr hohen Temperaturen, das heißt oberhalb 1700°C. Dieses Verhalten wird einer Chromoxidschicht zugeschrieben, die sich bei Beginn der Sinterung auf dem Material bildet /7/. Die Sinterung wird häufig aufwendig durch Zusatz von Sinterhilfsmitteln, wie z.B. Fluoriden, oder durch Dotierung mit Schmelzen bildenden Stoffen, wie z.B. Cobalt, gefördert. Es ist bekannt, daß ein B-Platz Unterschuß - respektive A-Platz Überschuß - der perowskitischen Verbindung zu verbessertem Sinterverhalten führt /8/.
Allerdings führ diese B-Platz Unterstöchiometrie nach eigenen Feststellungen bei langen Lagerzeiten der gesinterten Teil an Luft bei Raumtemperatur zum Zerfall der Verbindungen durch Lanthanhydrolyse. Diese Feststellungen wurden für calcium- und strontium-dotierte Lanthanchromite gemacht. Sie beziehen sich dabei insbesondere auf den Dotierungsbereich von etwa 10- bis 20-atomprozentiger Substitution des A-Platzes des Perowskiten.

### Chromatgehalt

Gegen Zerfall beständige strontium- oder calcium-dotierte Lanthanchromite benötigen einen B-Platz Überschuß, der zu erheblichen Chromatanteilen (Chrom VI) führt. Chrom VI-Verbindungen, die wie die vorliegenden wasserlöslich sind, sind als krebserzeugende Arbeitsstoffe der Kategorie A2 (im Tierversuch eindeutig krebserregend) eingeordnet /9/. Der Grenzwert zur Einstufung als krebserregender Arbeitsstoff liegt dabei bei 1000 mg Metallchromat/kg Lanthanchromit (1 ‰). Nach eigenen Messungen enthalten strontium- oder calcium-dotierte Lanthanchromite mit B-Platz Überschuß (andernfalls sind sie nicht gegen Zerfall beständig, s.o.) Chromatgehalte oberhalb dieser Grenze bis zu 10.000 mg/kg (10‰).

Der Erfindung liegt die Aufgabe zugrunde, ein Material für ein selbsttragendes Verbindungselement zur Verwendung in planaren Hochtemperaturbrennstoff- oder Elektrolysezellen zu schaffen, daß in seinen Eigenschaften an die anderen im Zellstack verwendeten Komponenten (insbesondere an den Festelektrolyten auf Zirkoniumoxid-Basis), bei gegenüber Sr-dotiertem Lanthanchromit stark verringerter Quellung, angepaßt ist.
Im Hinblick auf die Verwendung in planaren Hochtemperaturbrennstoff- oder Elektrolysezellen mit selbsttragenden Verbindungselementen beziehungsweise Elektrolyten sind wesentlich genauere Anpassungen der thermomechanischen Eigenschaften erforderlich als bei Zellen, die aus Dünnschichtsystemen aufgebaut sind. Desweiteren wird eine höhere elektrische Leitfähigkeit benötigt.
Eine weitere wesentliche Anforderung ist, daß sich das Material so weit durch Sintern verdichten läßt, daß es gasdicht gegenüber Wasserstoff bei Betriebstemperatur ist. Es muß also geschlossene Porosität (Sinterdichte > 96 % der theoretischen Dichte) des gesinterten Materials erreicht werden.

Es ist somit Aufgabe der Erfindung, ein Material mit den folgenden Eigenschaften zu schaffen:
- α_{20/1000} = 9,7 bis 10,4 · 10⁻⁶ K⁻¹
- Lineare Quellung bei 1000°C und p₀₂ = 10⁻¹⁸ bar gegenüber Luft ≦ 0,06 %
- Elektrische Leitfähigkeit σ ≧ 5 S/cm an Luft bei 1000°C
- Elektrische Leitfähigkeit σ ≧ 1 S/cm an Brenngas mit p₀₂ = 10⁻¹⁶ bar bei 1000°C
- Langzeitbeständigkeit gegen Zerfall durch Hydrolyse in wasserhaltiger oder wasserdampfhaltiger Umgebung
- Dichtsinterbar bei Temperaturen ≦ 1650°C.

Diese Aufgabe wird mit einem Material nach den kennzeichnenden Merkmalen des Anspruch 1 gelöst. Vorteilhafte Ausbildungen der Erfindung sind Gegenstand weiterer Ansprüche.

Erfindungsgemäß besitzt das Verbindungselement folgende Zusammensetzung:

La_{1+δ}MgₓAl_{y}Cr_{1-x-y}O_{3±ε}

mit 0 ≦ δ ≦ 0,1 und 0,02 ≦ x ≦ 0,1 und 0,1 ≦ y ≦ 0,20
sowie 0 ≦ ε ≦ 0,1.

Dabei wurde der B-Platz der perowskitischen Lanthanchromitstruktur sowohl mit Mg, als auch mit Al-Ionen dotiert.

Wie oben bereits erläutert, rührt der der Parameter ε vom Sauerstoffausbau unter reduzierenden Bedingungen her. Er stellt sich abhängig vom jeweiligen Sauerstoffpartialdruck ein. Um dies zu kennzeichnen, wird im folgenden statt O_{3±ε} auch O_{z} geschrieben.

Mit der erfindungsgemäßen Mischdotierungen konnte die Quellung stark reduziert werden, bei guter Leitfähigkeit und an den Festelektrolyt-Werkstoff angepaßter thermischer Dehnung. Das erfindungsgemäße Verbindungselement kann neben den in der Beschreibungseinleitung genannten Festelektrolyt-Werkstoffen auf Zirkoniumbasis auch für andere Festelektrolyt-Werkstoffe verwendet werden, soweit deren thermische Dehnung zwischen ca. 9,5 und 11*10⁻⁶K⁻¹ liegt.

Das erfindungsgemäße Material weist neben der genannten, optimalen Kombination der physikalischen Eigenschaften für den Einsatz in planaren Brennstoffzellen weitere vorteilhafte Eigenschaften auf:
- erhöhte Sinteraktivität durch Vermeidung freien Chromates mittels A-Platz Überschuß bei gleichzeitiger Beständigkeit gegen Wasser und Wasserdampfangriff.
- verringerte Giftigkeit durch geringen Chromatgehalt, der 10% des derzeit gültigen Grenzwertes nicht übersteigt durch A-Platz Überschuß.

Die beiden letztgenannten Eigenschaften werden im folgenden näher beschrieben:

### Sinterverhalten/Wasserdampfbeständigkeit bei Raumtemperatur

Ganz allgemein unterscheidet man bei der perowskitischen Lanthanchromitstruktur ABO₃ zwischen A-Gitterplätzen (A-Plätzen), die von La-Ionen besetzt sind und B-Gitterplätzen (B-Plätzen), die bei reinem Lanthanchromit von Cr-Ionen und im Falle der erfindungsgemäßen Verbindung auch von Mg- und Al-Ionen besetzt sind. Durch Leerstellen im Kristallgitter kann das Verhältnis der besetzten A-Plätze und B-Plätze in engen Grenzen verändert werden.

Bei der erfindungsgemäßen Verbindung konnte die Sintertemperatur bereits bei B-Platz Überschuß von 1750°C (LSC) auf 1650°C für die Mg/Al dotierten Verbindungen gesenkt werden. In beiden Fällen wurde eine Sinterdichte von über 98% erreicht, weshalb sämtliche angegebenen Temperaturen etwas höher als in der Literatur sonst üblich liegen. Die in der Literatur zitierten Sinterdichten betragen in der Regel nicht über 94%.

Eine weitere Senkung der Sintertemperatur erbrachte die Verwendung von Mg/Al Dotierungen, die einen A-Platz Überschuß aufweisen. Die Sintertemperatur konnte auf 1600°C bei 98% Sinterdichte gesenkt werden. Damit ist die Sinterung in für technische Keramik im großtechnischen Einsatz befindlichen Öfen möglich geworden, ohne nachteilige Flußmittel zusetzen zu müssen.

Die erfindungsgemäßen Mg/Al dotierten Lanthanchromitverbindungen zeigten weder bei Wasserdampfangriff noch bei Wasserangriff Zerfallerscheinungen. Dies gilt für Raumtemperatur wie auch für erhöhte Temperaturen. Es ist also speziell bei diesen Dotierungen möglich, die Überstöchiometrie des A-Platzes für ein verbessertes Sinterverhalten auszunutzen.

### Chromatgehalt

Die erfindungsgemäßen Mg/Al - dotierten Stoffe enthalten - bei A-Platz Überschuß - nur Chromatgehalte < 100 mg/kg und unterliegen damit bei Herstellung, Verarbeitung und Transport nicht den einschlägigen Vorschriften - wie z.B. Chemikaliengesetz mit Gefahrstoff-Verordnung - und den nationalen und internationalen Gefahrgutvorschriften Straße. Für diesen Effekt ist beispielsweise bereits ein A-Platz Überschuß von etwa 1%, entsprechend der Formel La_{₁+δ}MgₓAl_{y}Cr_{1-x-y}O_{z} mit δ ≈ 0,01 und 0,02 ≦ x ≦ 0,1 sowie 0,1 ≦ y ≦ 0,25 ausreichend. Mit diesen Materialien entstehen wesentlich niedrigere Verarbeitungskosten aufgrund geringerer Auflagen beim Arbeitsschutz. Die beschriebenen Chromatproblematik bezieht sich nur auf die pulverförmigen Stoffe bei der Herstellung. Nach der Sinterung betreten bei keinem Material Chromatgehalte oberhalb des Grenzwertes auf.

### Herstellung

Das erfindungsgemäße Material kann über chemische Routen wie Reaktionssprühverfahren, Sol-Gel-Verfahren oder Präzipitation ebenso wie über die mixed-oxide-Route durch Pulvermischen und ein- oder mehrfaches Calcinieren sowie Reaktionssintern hergestellt werden.

### Beispiel

Das erfindungsgemäß dotierte Lanthanchromit wird über Reaktionssprühen aus wässrigen Salzlösungen hergestellt. Die Pulver werden aus den gewünschten Metallchloriden hergestellt: CrCl₃ * n H₂O, MgCl₂ * n H₂O, AlCl₃ * n H₂O und LaCl₃ * n H₂O. Es werden äquimolare Mengen entsprechend der gewünschten Pulverzusammensetzung in Wasser gelöst und durch Einsprühen in ein 1300° C heißes Reaktionsrohr pyrolysiert. Das dabei entstendene Mischoxid wird über Zyclonabscheidung vom Gassstrom HCl/H₂O getrennt. Im nachgeschalteten Rieselturm wird das HCl vom Abgas getrennt. Das so gewonnene Pulver wird anschließend in einem Drehrohrofen bei 1200°C kalziniert und in einer Ringspaltkugelmühle in Wasser auf eine mittlere Korngröße von 0,7 µm gemahlen. Nach Trocknen des Pulves durch Gefriertrocknung wird der Foliengießschlicker mit Lösungsmittel, Binder, Plastifizierer und Verflüssiger in einer Trommelmühle homogenisiert und anschließend zur Folie vergossen. Die Probekörper werden über Stanzen und Laminieren aus der Folie hergestellt. Sie werden anschließend in einem Kammerofen in zwei Stufen gesintert. Stufe 1 beinhaltet das Austreiben der Organik bei 500°C, Stufe 2 die Sinterung bei 1600°C.

Die unten wiedergegebene Tabelle zeigt einen Vergleich der physikalischen-Eigenschaften einzelner erfindungsgemäßer Materialien mit bekannten Materialien.

| **Stoff** | α_{20/1000} | **Quellung******* **/ %** | **σ**_{**eI**} ^{********} **/ Scm**^{**-1**} |
|---|---|---|---|
| LaCrO₃ | 9,0 *** | 0,007 | ≈ 1 |
| LSC ** 16%-dotiert | 10,3 | 0,16 | 15 |
| La_{0,99}Mg_{0,05}Cr_{0,95}Oₓ | 9,0 *** | 0,007 | 3,1 |
| La_{1,03}Mg_{0,05}Al_{0,17}Cr_{0,78}O_{z} | 10,1 | 0,06 | 6 |
| La_{1,03}Mg_{0,05}Al_{0.14}Cr_{0,81}O_{z} | 10,0 | 0,06 | 6 |
| La_{1,03}Mg_{0,05}Al_{0,12}Cr_{0,83}O_{z} | 9,8 | 0,04 | 6 |

| | | | |
|---|---|---|---|
| * bei P₀₂ = 10⁻¹⁸ bar | | | |
| ** strontiumdotiertes Lanthanchromit | | | |
| *** Phasenumwandlung orthorhombisch/rhombeodrisch nicht unterdrückt | | | |
| **** gemessen an Luft (P₀₂ = 0,21 bar) | | | |

In der Tabelle sind neben drei erfindungsgemäßen Materialien auch LaCrO₃, strontiumdotiertes Lanthanchromit sowie Mg-dotiertes Lanthanchromit aufgeführt. Die erfindungsgemäßen Materialien zeichnen sich aus durch eine gute Anspassung des Ausdehnungskoeffiziennten α_{20/1000} an Zirkoniumoxid (um 10 * 10 ⁻⁶ K⁻¹ ) sowie eine moderate Quellung (kleiner als 0,6 %) bei relativ hoher elektrischer Leitfähigkeit an Luft (größer als 5 S/cm).

### Besonders vorteilhaft ist die Zusammensetzung

La_{1,03}Mg_{0,05}Al_{0,17}Cr_{0,78}O_{z}. Deren Leitfähigkeit ist der des LSC nur im oxidierenden Bereich unterlegen. Wegen der besonders guten Leitfähigkeit im reduzierenden Bereich ist die Leitfähigkeit des neu entwickelten Materials im Brennstoffzelleneinsatz, bei dem je eine Seite oxidierend (Luft) und eine Seite reduzierend (Brenngas) ist, der des LSC gleichwertig. Die-folgende Tabelle zeigt diese Zusammenhänge anhand der oxidierend und reduzierend gemessenen Leitfähigkeiten des erfindungsgemäßen Werkstoffes und LSC.

| **Stoff** | **σ**_{**el**} **/ Scm**^{**-1**} * | **σ**_{**el**} **/ Scm**^{**-1**} ** |
|---|---|---|
| LSC *** 16%-dotiert | 12 | 0,7 |
| La_{1,03}Mg_{0,05}Al_{0.17}Cr_{0,78}O_{z} | 6 | 1,4 |

| | | |
|---|---|---|
| * an Luft (bei P₀₂ = 0,21 bar) | | |
| ** an Brenngas (bei P₀₂ = 10⁻¹⁶ bar) | | |
| *** strontiumdotiertes Lanthanchromit | | |

Anhand einer Fig. wird die Erfindung weiter erläutert. Sie zeigt den Verlauf der Quellung über dem Sauerstoffpartialdruck bei 1000^{o}C, und zwar für reines, mit 16% Strontium dotiertes sowie mit 5% Mg/16% Al dotiertes Lanthanchromit gemäß der Erfindung. Die gegenüber dem Sr-dotierten Lanthanchromit über den gesamten Sauerstoffpartialdruckverlauf stark verringerte Quellung ist deutlich zu erkennen.

### Literatur

/1/ H.U. Anderson, J.H. Kuo, D.M. Sparlin
   Review of Defect Chemistry of LaMnO₃ and LaMnO₃ in: Proc. 1st Int. Symp. on Solid Oxide Fuel Cells Ed.: S.C. Singhal, The Electrochemical Society Pennington, NJ 1989 pp 111-128
/2/ R. Koc, H.U. Anderson, S.A. Howard, D.M. Sparlin
   Structural, Sintering and Electrical Properties of Perowskite-Type (La,Sr)(Cr,Mn)O₃ pp 220-241, ibid /1/
/3/ W.J. Weber, C.W. Griffin, J.L. Bates
   Effects on Cation Substitution on Electrical and Thermal Transport Properties of YCrO₃ and LaCrO₃ J. Am. Ceram. Soc. 70 265-270 (1989)
/4/ Proc. Int. Symp. on Solid Oxide Fuel Cells,
   2-5 July 1990 Athens
   Eds.: F. Gross, P. Zegers, S.C. Singhal, O. Yamamoto Office for Official Publications on the European Communities, Luxembourg 1991, Report EUR 13456 EN
/5/ Abstracts 1990 Fuel Cell Seminar
   Nov. 25-28, 1990 Phoenix, Arizona
/6/ S. Srilomsak, D.P. Schilling, H.U. Anderson
   Thermal Expansion Studies on Cathode and Interconnect Oxides
/7/ N. Q. Minh
   Ceramic Fuel Cells
   J. Am. Ceram. Soc. 76 563-568 (1993)
/8/ H.U. Anderson, R. Murphy, K. Huphrey, et al.
   Influence of Composition and Cation Stoichiometry on the Volatility, Electrical Conductivity and Thermal Expansion of LaCrO₃-Based Oxides
   - in:: The Rare Earths in Modern Science and Technology pp 55-61
   - Ed.:: G.J. McCarthy, J.J. Rhyne, New York 1978
/9/ MAK- und BAT-Werte-Liste 1993
   Mitteilung / Senatskommission zur Prüfung gesundheitsschädlicher Arbeitsstoffe; 29 Deutsche Forschungsgemeinschaft Weinheim 1993

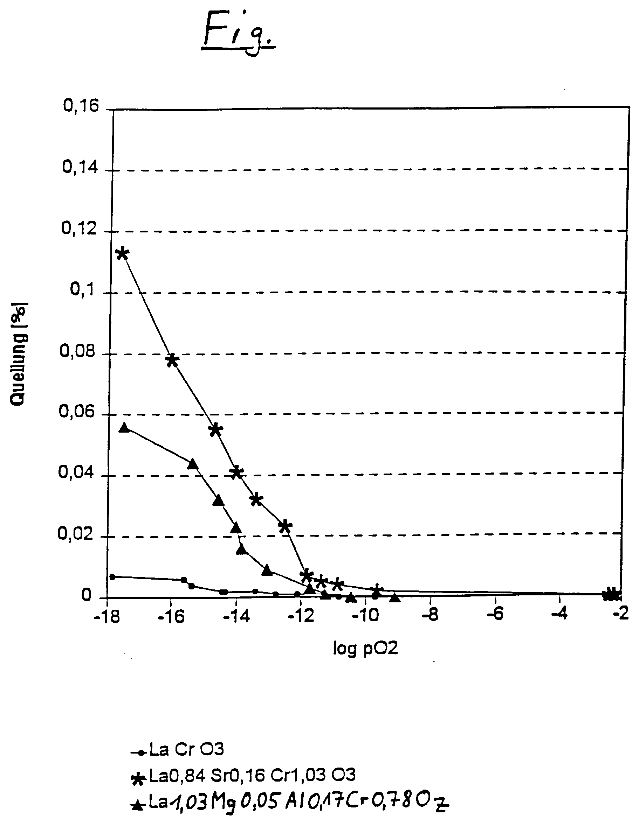

## Patentansprüche

1. Selbsttragendes Verbindungselement in planaren Hochtemperaturbrenntsoffzellen oder Hochtemperaturelektrolysezellen, **gekennzeichnet durch** die Zusammensetzung
La_{1+δ}MgₓAl_{y}Cr_{1-x-y}O_{3±ε}
mit 0 ≦ δ ≦ 0,1 und 0,02 ≦ x ≦ 0,1 und 0,1 ≦ y ≦ 0,20 sowie 0 ≦ ε ≦ 0,1.

2. Verbindungselement nach Anspruch 1, **gekennzeichnet durch** die Zusammensetzung La_{1,03}Mg_{0,05}Al_{0,17}Cr_{0,78}O_{3±ε} mit 0,0 ≦ ε ≦ 0,1.

3. Verbindungselement nach einem der vorangehenden Ansprüche, **dadurch gekennzeichnet**, daß das Verhältnis besetzte A-Gitterplätze zu besetzte B-Gitterplätze größer als 1,0 ist.

4. Verbindungselement nach einem der vorangehenden Ansprüche, **dadurch gekennzeichnet**, daß es zusätzlich eines oder mehrere Dotierelemente aus der Reihe Y, Ca, Sr, Fe, Co, Ni, Ti, oder Si bis jeweils 1 mol% enthält.

5. Verbindungselement nach einem der vorangehenden Ansprüche, **dadurch gekennzeichnet**, daß es weniger als 100 mg Chromat( pro Kiligramm Lanthanchromit enthält.
